# EUROPÄISCHE PATENTANMELDUNG

(11) **EP 3 985 264 A1**
(43) Veröffentlichungstag der Anmeldung: **20.04.2022**
(21) Anmeldenummer: 21201932.7
(22) Anmeldetag: 11.10.2021
(51) Int. Cl.: F15B 11/05, F15B 11/10, F15B 21/08, A01B 63/10

(54) **ANORDNUNG UND VERFAHREN ZUR ANSTEUERUNG EINES HUBWERKES**

(30) Priorität: 15.10.2020 DE 102020213039
(71) Anmelder: Robert Bosch GmbH, 70442 Stuttgart (DE)
(72) Erfinder: Schmuttermair, Peter, 86459 Gessertshausen (DE); Oschmann, Sebastian, 89312 Guenzburg (DE)

(57) **Zusammenfassung**

Offenbart ist eine Anordnung zur hydraulischen Ansteuerung eines mit zumindest einem Hubzylinder ausgeführten Hubwerkes oder Anbaugerätes, wobei eine "Tragen"-Seite bei Verstellung eines Hubwerksventils in Richtung seiner "Tragen"-Funktion über einen Drosselquerschnitt mit einer Druckmittelsenke verbindbar ist.

## Beschreibung

Die Erfindung betrifft eine Anordnung zur Ansteuerung eines mit zumindest einem Hubzylinder ausgeführten Hubwerkes eines mobilen Arbeitsgerätes und ein Verfahren zum Ansteuern eines derartigen Hubwerkes.

Derartige Anordnungen werden beispielsweise zur Steuerung der Arbeitsfunktionen von mobilen Arbeitsgeräten, insbesondere landwirtschaftlichen Nutzfahrzeugen wie Traktoren mit Krafthebern, Mähdreschern mit einer Mähtischregelung, Feldhäckslern mit einer Gebissregelung oder Kommunalmaschinen mit Krafthebern verwendet.

So sind beispielsweise moderne Traktoren mit einem Heckhubwerk und einem Fronthubwerk ausgeführt, wobei die Druckmittelversorgung dieser hydraulischen Verbraucher häufig nach einer LS-Regelung, d.h.in Abhängigkeit von dem höchsten Lastdruck der Verbraucher erfolgt. Das Heck- oder auch das Fronthubwerk können dabei jeweils doppeltwirkend ausgeführt sein, wobei die beispielsweise in einer Richtung "Heben"/"Stützen" bzw. "Senken"/"Drücken" wirksamen Druckräume eines Hubzylinders des Hubwerkes über ein stetig verstellbares Wegeventil mit einer Druckmittelquelle bzw. einem Rücklauf/Tank verbindbar sind, um die jeweiligen Funktionen ("Absenken"/"Drücken", "Heben"/Stützen", "Neutralstellung" oder "Schwimmstellung") zu realisieren. Die Ansteuerung des stetig verstellbaren Wegeventils erfolgt dabei vorzugsweise über ein elektrisches Steuergerät der Arbeitsmaschine, wobei die Sollwerte beispielsweise über ein Frontbedienteil oder ein Heckbedienteil des Arbeitsgerätes eingestellt werden.

Die zum "Heben" aufzubringende Kraft ist im Prinzip durch die wirksame Hubzylinderfläche und die vorgesehene Druckgrenze, die beispielsweise durch eine Pumpendruckbegrenzung oder ein Sekundärdruckbegrenzungsventil vorgegeben ist, beschränkt. Bei diversen Anbaugeräten, beispielsweise einem Mähwerk oder einem Mulcher, ist es notwendig, die Anbaugeräte beim Arbeiten mit einer definierten Kraft anzuheben, um deren Reibkraft zum Boden beim Fahren zu reduzieren. Zur Verbesserung der Traktion des mobilen Arbeitsgerätes, beispielsweise des Traktors, ist es vorteilhaft, das Anbaugerät mit einer definierten Kraft zu heben, um die Normalkraft an den Rädern und somit die Traktion des Traktors zu erhöhen. Zur Einstellung des Drucks auf der "Heben"-/"Tragen"-Seite des Hubzylinders sind aus dem Stand der Technik mehrere Lösungsmöglichkeiten bekannt.

In der Druckschrift DE 101 38 389 A1 der Anmelderin wird beispielsweise vorgeschlagen, das stetig verstellbare Wegeventil über einen elektronischen Druckregelkreis anzusteuern, der derart ausgeführt ist, dass ein Vier-Quadrantenbetrieb eines Hubwerkes mit "Heben", "Senken", "Drücken" und "Nachgeben" steuerbar ist. Ein derartiger rein elektronischer Druckregelkreis mit einer volumetrischen Regelung des Hubzylinders und einer Rückführung des Zylinderdrucks mit Drucksensorik bringt den Nachteil einer schlechten Regelbarkeit mit sich, da die in Richtung "Heben"/"Tragen" wirksame Druckmittelsäule im Hubzylinder sehr steif ist. Zudem ist diese rein elektronische Zulauf- und Ablaufsteuerung für den gewünschten Einsatzzweck zu langsam.

Aus den Druckschriften DE 10 2017 219 942 A1, EP 2 884 118 A1, US 2018/0042167 A1 und DE 10 2007 040 877 A1 ist es jeweils bekannt, den Druck auf der "Heben"-Seite des Hubzylinders über einen hydraulischen Druckregelkreis mit einem Druckregelventil bzw. einem Druckbegrenzungsventil zu regeln. Derartige hydraulische Druckregelkreise benötigen jedoch sehr performante hydraulische Druckregel-/Druckbegrenzungsventile, welche zum einen erheblichen Bauraum erfordern und zum anderen relativ teuer sind.

Demgegenüber liegt der Erfindung die Aufgabe zugrunde, eine Anordnung zur hydraulischen Ansteuerung eines Hubwerkes oder eines Anbaugerätes zu schaffen, durch die mit geringem vorrichtungs- und regelungstechnischen Aufwand eine Einstellung des Drucks in einem vorzugsweise in Richtung "Heben"/"Tragen" wirksamen Druckraum des Hubzylinders ermöglicht ist. Der Erfindung liegt des Weiteren die Aufgabe zugrunde, ein entsprechendes Verfahren zur Ansteuerung eines Hubwerkes oder eines Anbaugerätes zu schaffen.

Diese Aufgabe wird im Hinblick auf die Anordnung durch die Merkmale des Patentanspruches 1 und im Hinblick auf das Verfahren durch die Merkmale des nebengeordneten Patentanspruches 14 gelöst.

Vorteilhafte Weiterbildungen der Erfindung sind Gegenstand der Unteransprüche.

Die erfindungsgemäße Anordnung ist zur hydraulischen Ansteuerung eines mit zumindest einem Hubzylinder ausgeführten Hubwerkes oder Anbaugerätes eines mobilen Arbeitsgerätes, insbesondere eines landwirtschaftlichen Nutzfahrzeuges ausgelegt und hat ein stetig verstellbares Wegeventil, das einen Arbeitsanschluss hat, der in Druckmittelverbindung mit einem in einer ersten Betätigungsrichtung ("Heben") des Hubzylinders wirksamen Druckraum steht. Das Wegeventil hat einen weiteren Arbeitsanschluss, der in Druckmittelverbindung mit einem in einer zweiten Betätigungsrichtung ("Senken") wirksamen Druckraum des Hubzylinders steht. Das Wegeventil hat des Weiteren einen Tankanschluss und einen Druckanschluss, wobei durch Verstellen des Wegeventils Öffnungsquerschnitte (Zulauf-/Ablaufmessblende) zwischen den Anschlüssen auf- bzw. zusteuerbar sind.

Erfindungsgemäß zweigt von einem an den erstgenannten Arbeitsanschluss angeschlossenen Druckmittelströmungspfad ein Ablaufkanal ab, der zu einer Druckmittelsenke, vorzugsweise einem Tank, führt und in dem ein Drosselquerschnitt angeordnet ist, der bei Einstellung des Wegeventils in Richtung "Heben" geöffnet ist.

Dementsprechend erfolgt erfindungsgemäß durch Öffnen des definierten Drosselquerschnittes und durch den daraus resultierenden Volumenstrom aus dem in Richtung "Heben" wirksamen Druckraum zur Druckmittelsenke bei gleichzeitiger Regelung eines variablen Zulaufs in diesen Druckraum über das Wegeventil eine sehr schnelle Einstellung der vorgesehenen, in Richtung "Heben" wirksamen Kraft. Das erfindungsgemäße Verfahren sieht dementsprechend vor, das Wegeventil in eine Hebeposition zu verstellen und gleichzeitig den Ablaufkanal mit einem definierten Drosselquerschnitt zu öffnen.

Die erfindungsgemäße Anordnung lässt sich besonders kostengünstig realisieren, wenn der Drosselquerschnitt konstant ausgeführt ist und im Ablaufkanal ein Schaltventil zum Aufsteuern der Druckmittelverbindung zur Druckmittelsenke angeordnet ist.

Eine etwas variablere Ansteuerung ist möglich, wenn der Drosselquerschnitt durch ein proportional verstellbares Drosselventil variabel ausgeführt ist.

Ein derartiges Drosselventil kann in einer Schließstellung den Ablaufkanal zur Druckmittelsenke hin absperren und in Arbeitsstellungen den Drosselquerschnitt variabel aufsteuern.

Dabei wird es besonders bevorzugt, wenn das Drosselventil elektrisch verstellbar ausgeführt ist.

Zur Minimierung von Leckageverlusten kann das Drosselventil und/oder das Schaltventil als Sitzventil ausgeführt sein.

Die Einstellung des Drucks in dem in Richtung "Heben" wirksamen Druckraum des Hubzylinders lässt sich verbessern, wenn die Anordnung mit einem Drucksensor ausgeführt ist, über den der Druck in dem oben genannten Druckraum erfasst wird, wobei die Steuereinheit ausgelegt ist, das Wegeventil und/oder das Drosselventil auch in Abhängigkeit vom Signal des Drucksensors anzusteuern.

Das Steuergerät (Regler) kann auch so ausgelegt sein, dass eine Funktion "Senken" dadurch einbezogen wird, dass der Druckmittelströmungspfad über den Ablaufkanal geöffnet ist, jedoch über das Wegeventil kein Druckmittel in den in Richtung "Tragen" wirksamen Druckraum geführt wird, so dass ein sehr hoher Druck in diesem Druckraum effizient abgebaut werden kann. Dies ist beispielsweise notwendig, wenn das Anbaugerät wegen einer abfallenden Bodenkontur vom Boden abhebt und dann voll vom Hubwerk getragen wird.

Alternativ oder zusätzlich kann ein Positionssensor zur Erfassung einer Hubwerksposition vorgesehen werden. Die Steuereinheit ist dann derart ausgelegt, dass das Wegeventil und/oder das Drosselventil auch in Abhängigkeit vom Signal des Positionssensors ansteuerbar sind.

Bei einem bevorzugten Ausführungsbeispiel der Erfindung ist die Druckmittelsenke ein Tank.

Bei einer Variante der Erfindung strömt das Druckmittel über den Drosselquerschnitt und die "Drücken"-/"Senken"-Seite des Wegeventils zur Druckmittelsenke hin ab. Dadurch wird gleichzeitig auch eine Druckregelung auf der "Drücken"-Seite ermöglicht.

Bei einem derartigen Ausführungsbeispiel, bei dem an die beiden vorgenannten Arbeitsanschlüsse angeschlossene Arbeitsleitungen über den Ablaufkanal mit einander verbindbar sind, wird vorzugsweise zur Vermeidung einer Rückströmung des Druckmittels von der "Drücken"-Seite zur "Tragen"-Seite in dem Ablaufkanal, vorzugsweise stromabwärts des Drosselventils, ein in Richtung zur "Drücken"-Seite öffnendes Rückschlagventil vorgesehen.

Das Wegeventil kann mit einem Schieberverstellbereich "Schwimmstellung" und/oder "Neutral" und/oder "Senken" und/oder "Heben" ausgeführt sein.

Prinzipiell können auch ein konstanter Drosselquerschnitt und ein proportional verstellbarer Drosselquerschnitt kombiniert werden. So ist es beispielsweise möglich, zur Druckregelung auf der "Drücken"-Seite einen konstanten Drosselquerschnitt vorzusehen, während zur Druckregelung auf der "Tragen"-Seite ein proportional verstellbarer Drosselquerschnitt vorgesehen ist.

Bevorzugte Ausführungsbeispiele der Erfindung werden im Folgenden anhand schematischer Zeichnungen näher erläutert. Es zeigen:
Figur 1 einen vereinfachten Hydraulikschaltplan, der einen typischen Systemaufbau eines Hubwerkes eines Traktors zeigt;
Figur 2 einen vereinfachten Hydraulikschaltplan eines Ausführungsbeispiels mit einem Ablaufkanal, in dem ein konstanter Drosselquerschnitt ausgebildet ist;
Figur 3 ein weiteres Ausführungsbeispiel mit einem konstanten Drosselquerschnitt, wobei sich der Ablaufkanal zwischen einer "Tragen"-Seite und einer "Drücken"-Seite des Hubwerks erstreckt;
Figur 4 ein Ausführungsbeispiel, bei dem die Ansteuerung eines stetig verstellbaren Wegeventils auch in Abhängigkeit vom Signal eines Drucksensors erfolgt;
Figur 5 ein Ausführungsbeispiel, bei dem die Ansteuerung des stetig verstellbaren Wegeventils auch in Abhängigkeit vom Signal eines Positionssensors erfolgt;
Figur 6 ein Ausführungsbeispiel mit einem stetig verstellbaren Drosselquerschnitt, über den eine Druckmittelverbindung zu einem Tank aufsteuerbar ist und
Figur 7 ein Ausführungsbeispiel mit einem ebenfalls stetig verstellbaren Drosselquerschnitt, über den eine Druckmittelverbindung zwischen einer "Tragen"-Seite und einer "Drücken"-Seite aufsteuerbar ist.

Die Erfindung wird im Folgenden anhand einer Hubwerksanordnung 1 eines Traktors erläutert. Prinzipiell lässt sich die erfindungsgemäße Anordnung jedoch auch bei anderen doppelt wirkenden Verbrauchern eines mobilen Arbeitsgerätes einsetzen.

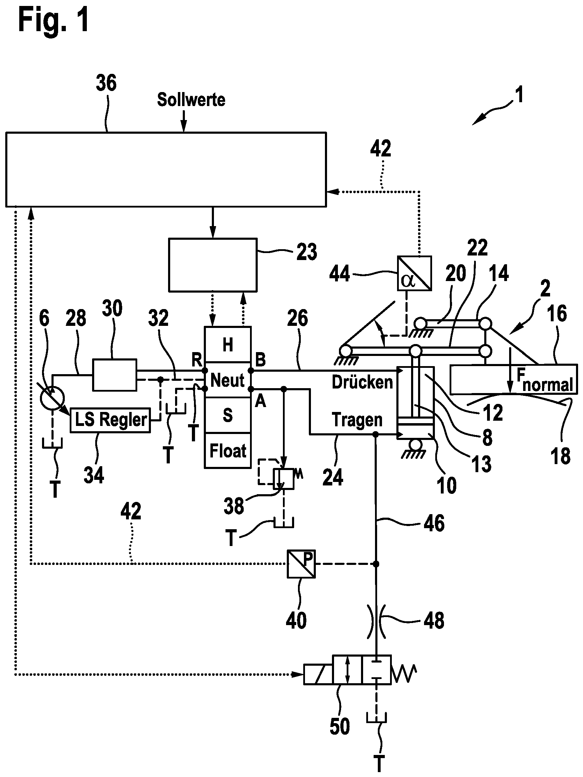

In dem Hydraulikschaltplan gemäß Figur 1 ist der Grundaufbau einer derartigen Hubwerksanordnung 1 eines mobilen Arbeitsgerätes, beispielsweise eines Traktors erläutert. Demgemäß hat die Hubwerksanordnung 1 ein hydraulisch betätigtes Hubwerk 2, dessen im Folgenden noch näher erläuterte Druckräume über ein stetig verstellbares Wegeventil 4 mit einer Verstellpumpe 6 oder einem Tank T verbindbar sind.

Beim dargestellten Ausführungsbeispiel hat das Hubwerk 2 einen gelenkig gelagerten Hubzylinder 8, der als Differentialzylinder mit einem bodenseitigen Druckraum 10 und einem kolbenstangenseitigen Ringraum 12 ausgeführt ist. Eine Kolbenstange 13 greift an einer Lenkeranordung 14 an, so dass beim Ausfahren der Kolbenstange 13 ein Anbaugerät, beispielsweise ein Mähwerk 16 angehoben wird und beim Einfahren der Kolbenstange 13 das Anbaugerät 16 abgesenkt oder auf einen Boden 18 gedrückt wird. Dementsprechend wirkt der bodenseitige Druckraum 10 in Richtung "Tragen"/"Heben" und der Ringraum 12 in Richtung "Drücken"/"Senken". Prinzipiell kann jedoch auch ein Konzept realisiert werden, bei dem der Ringraum 12 in Richtung "Heben" und der Druckraum 10 in Richtung "Drücken" wirksam ist.

Beim dargestellten Ausführungsbeispiel ist die Lenkeranordnung 14 stark vereinfacht dargestellt. Im Grundprinzip hat diese zwei Lenkerarme 20, 22, die in an sich bekannter Weise am Traktor oder an dem mobilen Arbeitsgerät, beispielsweise über eine Hubwelle oder dergleichen angelenkt sind. Der Aufbau dieser Lenkeranordnung 14 ist bekannt, so dass weitere Erläuterungen entbehrlich sind.

Wie in Figur 1 angedeutet, kann das Hubwerk 2 so eingestellt werden, dass das Anbaugerät 16 mit einer vorbestimmten Normalkraft Fₙₒᵣₘₐₗ gegen den Boden 18 gedrückt wird und so der Bodenkontur folgen kann. Selbstverständlich kann das Anbaugerät 16 auch vollständig vom Boden 18 abgehoben werden.

Die Druckmittelversorgung des Hubzylinders 8 wird über das mittels einer elektrischen oder hydraulischen Positionsregelung 23 stetig verstellbare Wegeventil 4 gesteuert, das beim dargestellten Ausführungsbeispiel mit einem Neutralstellungsbereich, einem "Heben"-Stellungsbereich, einem "Senken"-Stellungsbereich und einem "Schwimm"-Stellungsbereich ausgeführt ist. Diese Verstellbereiche eines Schiebers des Wegeventils 4 sind jedoch nur beispielhaft erwähnt, selbstverständlich kann das Wegeventil 4 (auch Hubwerksventil genannt) auch mit anderen Stellungsbereichen ausgeführt sein.

Beim dargestellten Ausführungsbeispiel hat das Wegeventil 4 zwei Arbeitsanschlüsse A, B, wobei der Arbeitsanschluss A über eine Arbeitsleitung 24 mit dem Druckraum 10 und der Arbeitsanschluss B über eine Arbeitsleitung 26 mit dem Ringraum 12 verbunden ist. Ein Druckanschluss der Verstellpumpe 6 ist über eine Zulaufleitung 28 mit einem Druckanschluss P des Wegeventils 4 verbunden. Dieses hat des Weiteren einen Tankanschluss T, der über eine Tankleitung mit dem genannten Tank T verbunden ist. Das Wegeventil 4 ist zudem mit einer LS-Druckentlastung ausgeführt.

Beim dargestellten Ausführungsbeispiel ist die Hubwerksanordnung 1 nach dem Load-Sensing-Regelprinzip ausgeführt, bei dem die Einstellung der Verstellpumpe 6 in Abhängigkeit vom höchsten Lastdruck der Verbraucher erfolgt. Selbstverständlich kann die Hubwerksanordnung 1 auch nach einem anderen Regelprinzip gesteuert werden.

Beim dargestellten Ausführungsbeispiel ist in der Zulaufleitung 28 eine LS-Druckwaage 30 vorgesehen, die an sich bekannter Weise in Schließrichtung von einer nicht dargestellten Druckwaagenfeder und dem Druck in einem LS-Kanal 32 beaufschlagt ist, der stromabwärts der jeweils durch das Wegeventil 4 aufgesteuerten Zulaufmessblende abgegriffen wird. In Gegenrichtung, d.h. in Öffnungsrichtung der LS-Druckwaage 30 wirkt der Druck am Ausgang der Verstellpumpe 6. In Abhängigkeit von der Messblendenöffnung stellt sich die Druckwaage 30 in eine Regelposition ein, in der der Druckabfall über der Messblende konstant gehalten wird und in etwa dem Druckäquivalent der Kraft der Druckwaagenfeder entspricht, so dass ein konstanter Druckmittelvolumenstrom über die vom Wegeventil 4 aufgesteuerte Messblende gewährleistet ist.

Der in der Zulaufleitung 28 anliegende Förderdruck der Verstellpumpe 6 wird bei einer derartigen LS-Steuerung in Abhängigkeit von dem höchsten an den Verbrauchern des Traktors anliegenden Lastdruck eingestellt. Dieser wird an einen LS-Druckregler 34 gemeldet, über den in an sich bekannter Weise die Einstellung der Verstellpumpe 6 in Abhängigkeit vom höchsten Lastdruck erfolgt.

Wie vorstehend ausgeführt, ist das Wegeventil 4 üblicher Weise mit einer elektrischen oder hydraulischen Positionsregelung 23 ausgeführt, gemäß der die Ansteuerung über ein Steuergerät 36 des Traktors erfolgt, wobei - wie vorstehend ausgeführt - die Sollwerte beispielsweise über ein Frontbedienteil oder ein Heckbedienteil des Arbeitsgerätes einstellbar sind.

Der Druck in der in Richtung "Tragen" wirksamen Arbeitsleitung 24 ist beim dargestellten Ausführungsbeispiel über ein "Tragen"-Sekundärdruckbegrenzungsventil 38 begrenzt. Selbstverständlich kann auch der Arbeitsleitung 26 ein derartiges Druckbegrenzungsventil zugeordnet sein. In der Figur 1 nicht dargestellt sind entsperrbare Rückschlagventile, die zumindest auf der "Tragen"-Seite vorgesehen sind und dazu dienen, ein unerwünschtes Absinken des Hubzylinders 8 (Krafthebers) aufgrund einer Leckage zu verhindern. Das Sekundärdruckbegrenzungsventil 38 ist vorgesehen, um durch Störungen induzierte Überdrucksituationen abzufangen, so dass das Druckmittel bei Überschreiten des eingestellten Drucks Druckmittel in Richtung zum Tank T ablässt

In Figur 1 sind noch optionale Sensoren dargestellt. Demgemäß kann beispielsweise ein Drucksensor 40 vorgesehen sein, um den Druck in der Arbeitsleitung 24 zu erfassen. Dieser Druck wird dann über eine Signalleitung 42 an das Steuergerät 36 gemeldet, dessen Regelungssoftware derart ausgebildet ist, dass die Einstellung des Wegeventils 4 auch in Abhängigkeit von dem Druck in der Arbeitsleitung 24 erfolgt. So kann beispielsweise bei der Abweichung des Signals des Drucksensors 40 von Sollwerten, beispielsweise bedingt durch eine ungenaue Auslenkung des Schiebers des Wegeventils 4 oder durch sonstige Störungen, über die Regelungssoftware/den Regelalgorithmus des Steuergerätes 36 bzw. der Positionsregelung 23 die Schieberposition entsprechend der Regelabweichung korrigiert werden.

Eine weitere Option besteht darin, die Stellung des Hubzylinders 8 durch einen Positionssensor 44 zu erfassen. Beim dargestellten Ausführungsbeispiel ist dieser als Winkelsensor ausgeführt, mit dem der Anstellwinkel des Lenkerarms 22 erfasst wird. Dadurch ist es beispielsweise möglich, den theoretischen Volumenstrom auf der "Drücken"-Seite (alternativ die Zylindergeschwindigkeit/ Hubwerksgeschwindigkeit, die über große Bereiche annähernd proportional sind) zu berechnen. Auf die Funktion dieser beiden Sensoren wird in der Folge noch detailliert eingegangen.

Bis hierhin unterscheidet sich der in Figur 1 dargestellte Systemaufbau nicht von herkömmlichen Lösungen. Erfindungsgemäß wird zur Vereinfachung der Regelung der Hubwerksposition die in Richtung "Tragen" wirksame Arbeitsleitung 24 im Bereich zwischen dem Druckraum 10 und dem Arbeitsanschluss A mit einem Ablaufkanal 46 verbunden, über den ein Druckmittelströmungspfad zu einer Druckmittelsenke, beispielsweise dem Tank T, aufsteuerbar ist. Wie im Folgenden noch näher erläutert wird, ist in dem Ablaufkanal 46 ein Drosselquerschnitt 48 ausgebildet, der bei Verstellung des Wegeventils 4 in Richtung seiner "Heben"-Position wirksam ist, so dass die Einstellung des "Tragen"-Drucks mit Hilfe des Druckmittelvolumenstroms durch diesen Drosselquerschnitt ermöglicht wird, wobei gleichzeitig das Wegeventil 4 einen variablen Zulauf regelt.

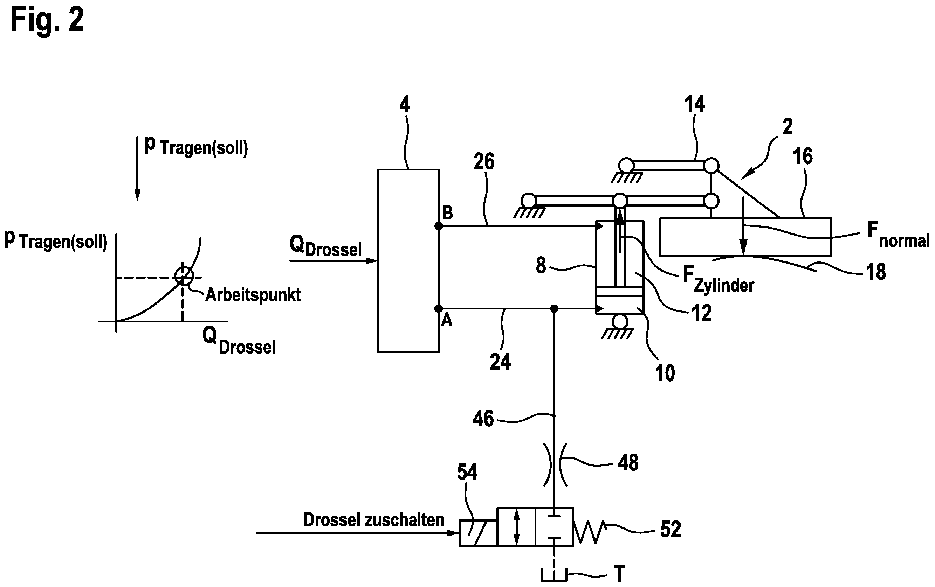

Dies wird anhand der konkreten Ausführungsbeispiele gemäß den Figuren 2 bis 7 erläutert. In diesen Figuren sind lediglich die zum Verständnis der Erfindung wesentlichen Komponenten des Systemaufbaus gemäß Figur 1 dargestellt.

Das in Figur 2 dargestellte Ausführungsbeispiel entspricht im Hinblick auf den Aufbau des Ablaufkanals 46 mit dem Drosselquerschnitt 48 dem Systemaufbau gemäß Figur 1. Dementsprechend zweigt der Ablaufkanal 46 von der zum bodenseitigen Druckraum 10 des Hubzylinders 8 führenden Arbeitsleitung 24 ab. Stromabwärts des Drosselquerschnittes 48 ist ein Schaltventil 50 vorgesehen, das über eine Feder 52 in seine Schließstellung vorgespannt ist und das sich elektrisch oder hydraulisch zum Aktivieren der vorgenannten "Tragen"-Druckregelung in eine Öffnungsstellung umschalten lässt. Dies erfolgt beispielsweise über einen Schaltmagneten 54, der über das Steuergerät 36 (siehe Figur 1) zum Zuschalten des Drosselquerschnitts bestromt wird. Dementsprechend ist das Schaltventil 50 beim dargestellten Ausführungsbeispiel als 2/2-Wegeventil ausgeführt. In der Schaltstellung ist die Druckmittelverbindung des Ablaufkanals 46 zum Tank T hin aufgesteuert.

Das Zuschalten des Drosselquerschnitts 48 und somit das Aktivieren der Tragendruckregelung erfolgt beispielsweise um den Bodenkontakt des Anbaugerätes 16 definiert zu entlasten. Dabei existiert zu jeder gewünschten Entlastungskraft ein statischer Volumenstrom, welcher durch das Steuergerät 36 im Wegeventil 4 eingestellt werden kann. In dem in Figur 1 links dargestellten Diagramm ist die Abhängigkeit dieses statischen Volumenstroms Q_{Drossel} von der gewünschten Entlastungskraft dargestellt, die proportional ist zu dem Druck p_{Tragen(Soll)}. Aus der im Steuergerät abgelegten Kennlinie kann dann der jeweilige Arbeitspunkt in Abhängigkeit von dieser Entlastungskraft und somit der Sollwert des statischen Volumenstroms ermittelt werden, so dass die Einstellung des Wegeventils 4 entsprechend erfolgt. Dabei wirken allerdings Volumenstromstörungen aus dem Hubzylinder 8, die üblicher Weise durch die Bodenkontur oder ein Einfedern des Fahrzeugs hervorgerufen werden, auch als Störung auf den Entlastungsdruck.

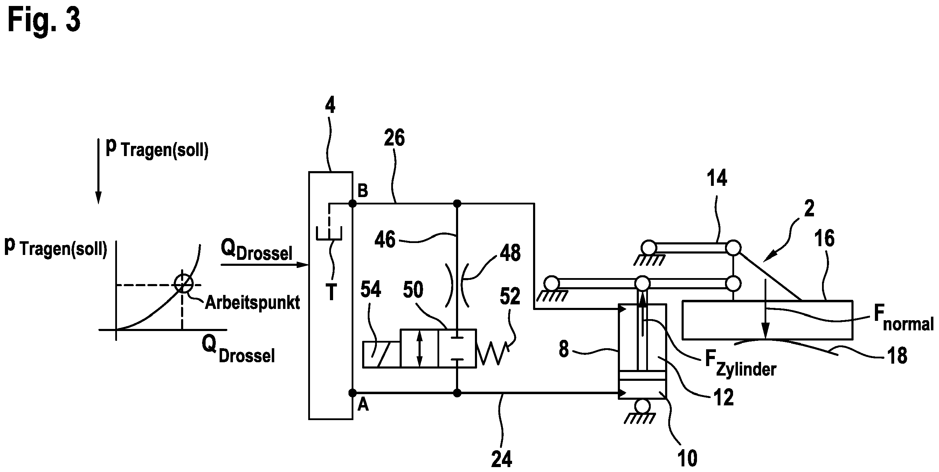

Gemäß einer in Figur 3 dargestellten alternativen Lösung kann der Ablaufkanal 46 auch so ausgebildet werden, dass er nicht direkt in den Tank T sondern in die der "Drücken"-Seite zugeordnete Arbeitsleitung 26 einmündet. Bei der Darstellung gemäß Figur 3 ist dabei der konstante Drosselquerschnitt 48 stromabwärts des Schaltventils 50 angeordnet (bei Verstellung des Wegeventils 4 in den "Tragen"/"Heben"-Bereich). Selbstverständlich kann das Schaltventil 50 auch - wie beim Ausführungsbeispiel gemäß Figur 2 - stromabwärts des definierten Drosselquerschnitts 48 vorgesehen werden.

Beim Ausführungsbeispiel gemäß Figur 3 wird somit der über den Drosselquerschnitt 48 ablaufende Druckmittelvolumenstrom über das Wegeventil 4 in den Tank T zurückgeführt, da bei der gewählten "Heben"-Auslenkung des Ventilschiebers des Wegeventils 4 die "Drücken"-Seite des Wegeventils 4 weit genug zum Tank T hin aufgesteuert ist, um das ablaufende Druckmittel drucklos zum Tank T zu führen.

Der Vorteil bei dieser Lösung besteht darin, dass die Anordnung gleichzeitig auch zur Druckregelung auf der "Drücken"-Seite nutzbar ist. Dabei wird dann bei Verstellung des Wegeventils 4 in seine "Senken"-/"Drücken"-Auslenkung über den Drosselquerschnitt 48 ein Druckmittelvolumenstrom ausgesteuert und dann auf der "Tragen"-Seite über das Wegeventil 4 zum Tank T hin abgeführt.

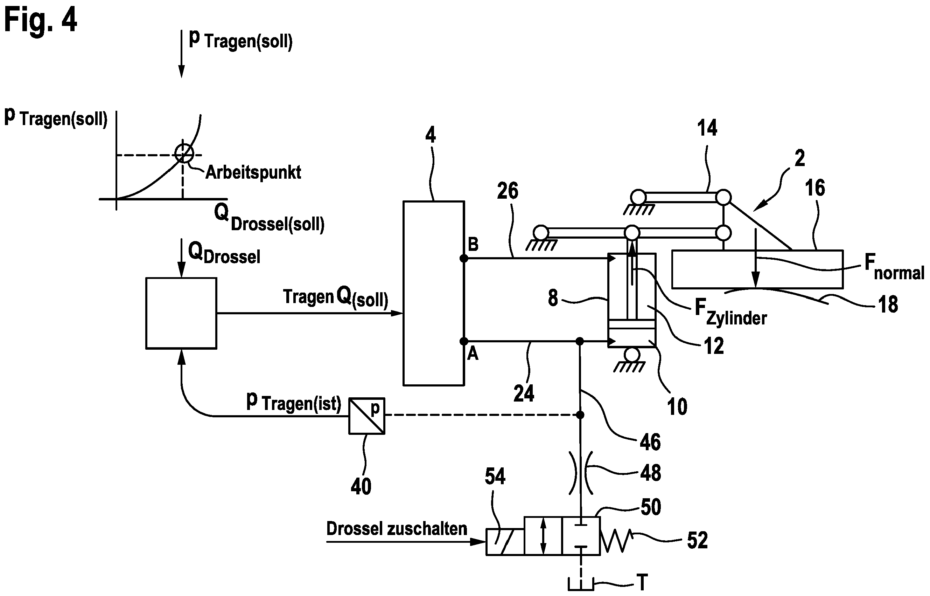

In Figur 4 ist eine Weiterbildung der Konzepte gemäß den Figuren 2 und 3 dargestellt, gemäß der - wie bereits anhand von Figur 1 erläutert - über den Drucksensor 40 der Druck auf der "Tragen"-Seite, genauer gesagt der Druck im Ablaufkanal 46, erfasst wird. Um Störungen, wie beispielsweise ein ungenaue Fertigung des Drosselquerschnitts 48, eine ungenaue Auslenkung des Schiebers des Wegeventils 4 oder Störungen durch den Hubzylindervolumenstrom auszugleichen, kann dann über den Regelalgorithmus des Steuergerätes 36 in Abhängigkeit vom Signal des Drucksensors 40, d.h. des von diesem erfassten Drucks p_{Tragen(Ist)} und dem über die Kennlinie ermittelten Volumenstrom über den Drosselquerschnitt 48 (Q_{Drossel}) ein korrigierter Drossel-Volumenstrom Q_{Soll} entsprechend der Regelabweichung ermittelt werden. Die Einstellung des Wegeventils 4 erfolgt dann in Abhängigkeit von diesem korrigierten Soll-Volumenstrom. Es wird somit eine Art "Closed-Loop-Druckregelung" realisiert.

Um einen zu hohen Druck aufgrund von Hubzylindervolumenströmen effizient abzubauen, kann das Steuergerät 36 die Stellung "Drücken"/"Senken" miteinbeziehen, so dass nur noch eine Steuerkantenöffnung Richtung "Rücklauf" ohne zulaufendes Druckmittel genutzt wird. Dies kann beispielsweise dann erforderlich sein, wenn das Anbaugerät 16 wegen einer abfallenden Bodenkontur voll vom Hubwerk 2 getragen wird, da es vom Boden 18 abhebt.

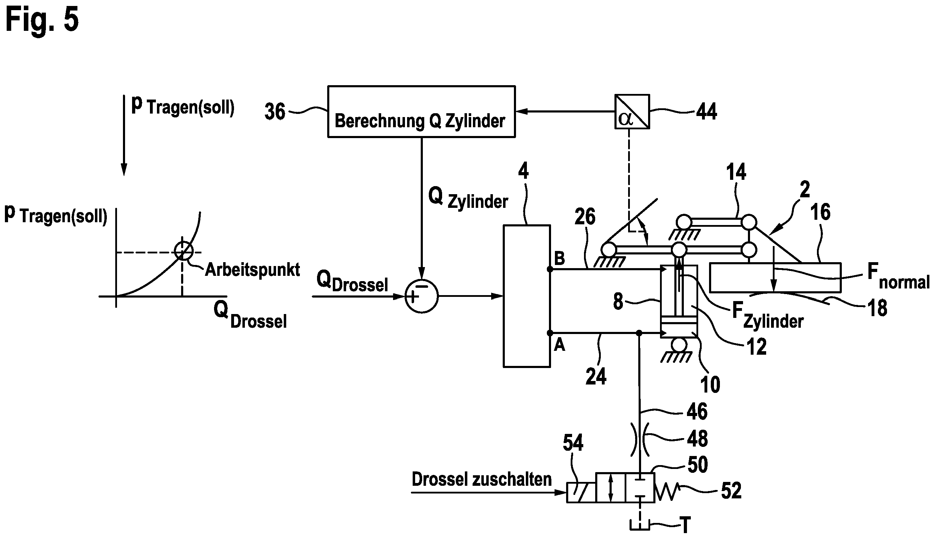

Gemäß dem in Figur 5 dargestellten Ausführungsbeispiel kann der bereits anhand Figur 1 erläuterte Positionssensor 44 genutzt werden, um die Position der Kolbenstange 13 des Hubzylinders 8 oder den Anstellwinkel der Lenkerarme 20 oder 22 oder ähnliches zu erfassen. Bei dem in Figur 5 dargestellten Ausführungsbeispiel ist dieser Positionssensor 44 als Winkelsensor ausgebildet, der den Schwenkwinkel des Lenkerarms 22 erfasst. Auf der Basis des Signals dieses Positionssensors 44, über den beispielsweise eine Änderung der Hubwerksposition aufgrund einer Störung (Bodenunebenheit) erfasst wird, kann dann der aus dieser Störung resultierende theoretische Volumenstrom am Hubzylinder 8 (oder alternativ die Zylindergeschwindigkeit/Hubwerksgeschwindigkeit, welche über große Bereiche annähernd proportional sind) berechnet werden. Dementsprechend kann der in der vorbeschriebenen Weise ermittelte Volumenstrom über den Drosselquerschnitt 48 (Q_{Drossel}) um den der Störung entsprechenden Zylindervolumenstrom Q_{Zylinder} reduziert/erhöht werden, so dass eine verbesserte Steuerung des über den Drosselquerschnitt 48 zum Tank T hin abströmenden Druckmittelvolumenstroms gewährleistet ist.

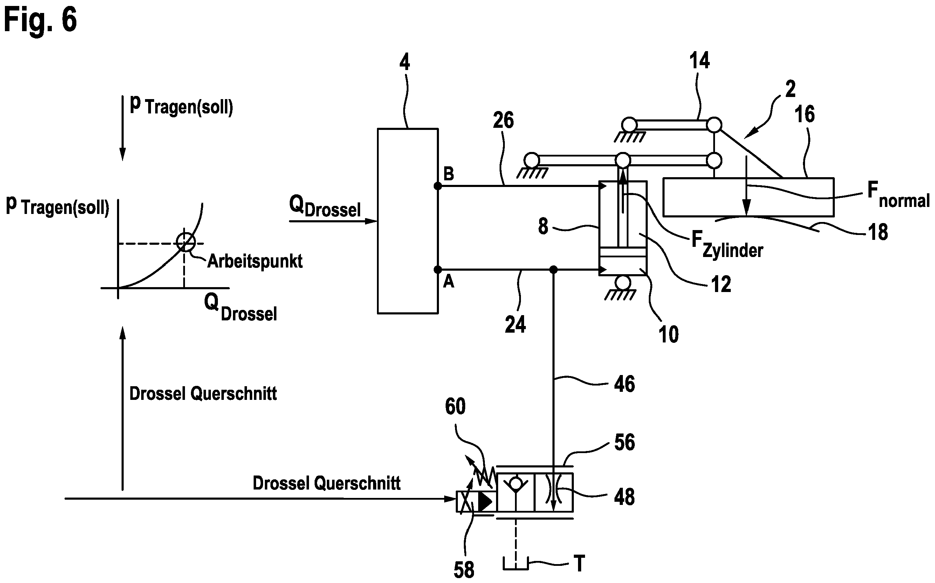

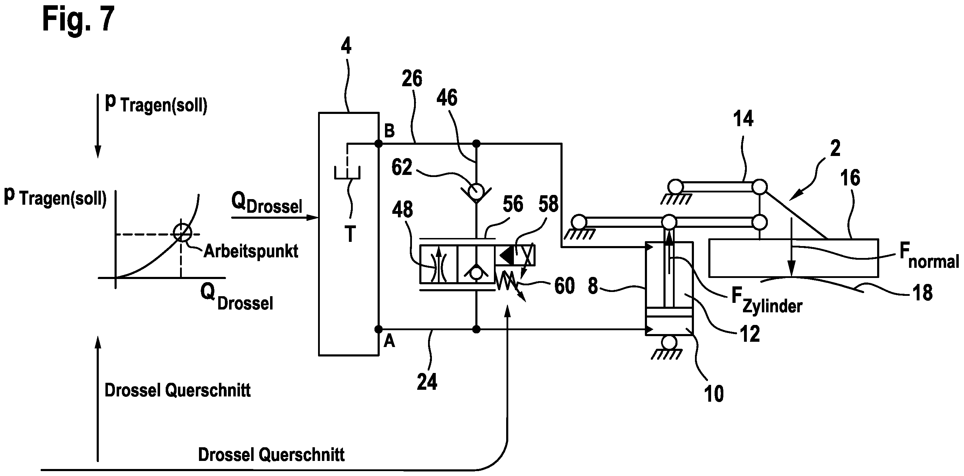

Bei den vorbeschriebenen Ausführungsbeispielen ist der Drosselquerschnitt 48 konstant ausgeführt. Anhand der Figuren 6 und 7 werden Ausführungsbeispiele erläutert, bei denen der Drosselquerschnitt 48 verstellbar ausgeführt ist.

Der strukturelle Aufbau gemäß Figur 6 entspricht im Prinzip dem anhand der Figur 2 erläuterten Aufbau, wobei anstelle des konstanten Drosselquerschnitts 48 ein Drosselventil 56 verwendet wird, über das der Drosselquerschnitt 48 proportional verstellbar ist. Beim dargestellten Ausführungsbeispiel ist das Drosselventil 56 elektrisch proportional verstellbar ausgeführt, wobei die Verstellung mittels eines Proportionalmagneten 58 erfolgt, der über das Steuergerät 36 eingestellt wird. Das Drosselventil 56 ist als Sitzventil ausgeführt und über eine Schließfeder 60 in eine Sperrstellung vorgespannt, in der der Ablaufkanal 46 leckagefrei abgesperrt ist. Durch Ansteuerung des Proportionalmagneten 58 über das Steuergerät 36 kann der gewünschte Drosselquerschnitt 48 eingestellt werden.

Die Verwendung eines derartigen stufenlos verstellbaren Drosselventils 56 anstelle der vorbeschriebenen Kombination aus konstantem Drosselquerschnitt 48 und zugeordnetem Schaltventil 50 ergibt einen weiteren Freiheitsgrad in der Regelung, da für einen gewünschten Druck im Druckraum 10 auch der hierfür notwendige Volumenstrom über das Drosselventil 56 eingeregelt werden kann.

In einer besonderen Ausprägung wird zur Entlastung des Druckraums 10 ein konstanter Volumenstrom eingestellt/ausgesteuert und der Druck im Druckraum 10 über die Einstellung des Wegeventils 4 eingeregelt.

Weiterhin kann zur Stabilisierung des Drucks der Drosselquerschnitt 48 vergleichsweise groß eingestellt werden, so dass dann nach einer Stabilisierung des Systems der Drosselquerschnitt 48 zur Verringerung von Verlusten langsam verkleinert werden kann.

Die Anmelderin behält sich vor, auf diese Regelstrategien eigene Patentansprüche zu richten.

Wie erläutert, kann das proportional verstellbare Drosselventil 56 auch beim Ausführungsbeispiel gemäß Figur 3 verwendet werden, bei dem der Ablaufkanal 46 die beiden Arbeitsleitungen 24, 26 mit einander verbindet. Bei dem dargestellten Ausführungsbeispiel sperrt das Drosselventil 56 in seiner federvorgespannten Grundposition jedoch lediglich die Druckmittelströmung von der Arbeitsleitung 24 hin zur Arbeitsleitung 26. Für den Fall, dass ein Druckaufbau in der "Drücken"-Arbeitsleitung 26 erforderlich ist, kann - wie in Figur 7 dargestellt - im Ablaufkanal 46 ein Rückschlagventil 62 vorgesehen werden, das eine Druckmittelströmung von der Arbeitsleitung 26 über den Ablaufkanal 46 zur Arbeitsleitung 24 sperrt.

Prinzipiell ist es auch möglich, die vorbeschriebenen Lösungen zu kombinieren. So ist es beispielsweise vorstellbar, zur Druckregelung auf der "Drücken"-Seite einen konstanten Drosselquerschnitt 48 gemäß den vorstehenden Ausführungen einzusetzen und zur Druckregelung auf der "Tragen"-Seite ein Drosselventil 56 gemäß den Figuren 6 und 7 mit variablem Drosselquerschnitt 48 zu verwenden.

Um ein leckagefreies Absperren zu gewährleisten, kann auch bei den Ausführungsbeispielen gemäß den Figuren 2 bis 5 das Schaltventil 50 als Sitzventil ausgeführt sein. Bei geringeren Anforderungen können sowohl das Schaltventil 50 als auch das Drosselventil 56 als Schieberventile ausgeführt sein, so dass eine leckagefreie Absperrung beispielsweise durch zusätzliche Rückschlagventile gewährleistet werden muss oder aber die Leckage in Kauf genommen wird.

Das erfindungsgemäße Konzept mit dem Aufsteuern eines Drosselquerschnitts 48 auf der "Tragen"-Seite und gleichzeitiger Verstellung des Wegeventils 4 in Richtung der "Tragen"-Funktion kann prinzipiell bei jeder Hubwerkssteuerung verwendet werden, welche in der "Heben"-Stellung des Wegeventils 4 einen Volumenstrom entsprechend der Vorgabe durch die Regelungssoftware des Steuergerätes 36 steuern kann.

Offenbart ist eine Anordnung zur hydraulischen Ansteuerung eines mit zumindest einem Hubzylinder ausgeführten Hubwerkes oder Anbaugerätes, wobei eine "Tragen"-Seite bei Verstellung eines Hubwerksventils in Richtung seiner "Tragen"-Funktion über einen Drosselquerschnitt mit einer Druckmittelsenke verbindbar ist.

### Bezugszeichenliste:

- 1: Hubwerkanordnung
- 2: Hubwerk
- 4: Wegeventil
- 6: Verstellpumpe
- 8: Hubzylinder
- 10: Druckraum
- 12: Ringraum
- 13: Kolbenstange
- 14: Lenkeranordnung
- 16: Anbaugerät
- 18: Boden
- 20: Lenkerarm
- 22: Lenkerarm
- 23: elektr./hydr. Positionsregelung
- 24: Arbeitsleitung
- 26: Arbeitsleitung
- 28: Zulaufleitung
- 30: LS-Druckwaage
- 32: LS-Kanal
- 34: LS-Regler
- 36: Steuergerät
- 38: Druckbegrenzungsventil
- 40: Drucksensor
- 42: Signalleitung
- 44: Positionssensor
- 46: Ablaufkanal
- 48: Drosselquerschnitt
- 50: Schaltventil
- 52: Feder
- 54: Schaltmagnet
- 56: Drosselventil
- 58: Proportionalmagnet
- 60: Schließfeder
- 62: Rückschlagventil

## Patentansprüche

1. Anordnung zur hydraulischen Ansteuerung eines mit zumindest einem Hubzylinder (8) ausgeführten Hubwerkes (2) oder Anbaugerätes (16) eines mobilen Arbeitsgerätes, insbesondere eine landwirtschaftlichen Nutzfahrzeuges, mit einem stetig verstellbaren Wegeventil (4), das einen Arbeitsanschluss (A) hat, der in Druckmittelverbindung mit einem in einer ersten Betätigungsrichtung ("Heben") wirksamen Druckraum (10) des Hubzylinders 8) steht und das einen weiteren Arbeitsanschluss (B) hat, der in Druckmittelverbindung mit einem zweiten, in einer zweiten Betätigungsrichtung ("Senken") wirksamen Druckraum (12) des Hubzylinders (8) steht, wobei das Wegeventil (4) noch einen Tankanschluss (T) und einen Druckanschluss (P) hat und durch Verstellen des Wegeventils (4) Öffnungsquerschnitte zwischen den Anschlüssen auf- bzw. zusteuerbar sind und mit einem Steuergerät (36) zur Ansteuerung des Wegeventils (4), **gekennzeichnet durch** einen Ablaufkanal (46), der von dem an den Arbeitsanschluss (A) angeschlossenen Druckmittelströmungspfad abzweigt und zu einer Druckmittelsenke führt und in dem ein Drosselquerschnitt (48) angeordnet ist, der bei Verstellung des Wegeventils (4) in Richtung "Heben" geöffnet ist.

2. Anordnung nach Patentanspruch 1, wobei der Drosselquerschnitt (48) konstant ist und im Ablaufkanal (46) ein Schaltventil (50) zum Aufsteuern der Druckmittelverbindung zur Druckmittelsenke angeordnet ist.

3. Anordnung nach Patentanspruch 1, wobei der Drosselquerschnitt (48) durch ein proportional verstellbares Drosselventil (56) ausgeführt ist.

4. Anordnung nach Patentanspruch 3, wobei das Drosselventil (56) in einer Schließstellung den Ablaufkanal (46) zur Druckmittelsenke hin absperrt und in Arbeitsstellungen den Drosselquerschnitt (48) proportional steuert.

5. Anordnung nach Patentanspruch 3 oder 4, wobei das Drosselventil (56) elektrisch verstellbar ausgeführt ist.

6. Anordnung nach einem der Patentansprüche 2 bis 5, wobei das Drosselventil (56) und/oder das Schaltventil (50) als Sitzventil ausgeführt sind.

7. Anordnung nach einem der vorhergehenden Patentansprüche, mit einem Drucksensor (40), vorzugsweise zum Erfassen des Drucks in dem in Richtung "Heben" wirksamen Druckraum, insbesondere des Drucks im Ablaufkanal (46), wobei das Steuergerät (36) ausgelegt ist, das Wegeventil (4) und/oder das Drosselventil (56) auch in Abhängigkeit vom Signal des Drucksensors (40) anzusteuern.

8. Anordnung nach einem der vorhergehenden Patentansprüche, mit einem Positionssensor (44) zur Erfassung einer Hubwerksposition, vorzugsweise einem Winkelsensor, wobei das Steuergerät (36) ausgelegt ist, das Wegeventil (4) und/oder das Drosselventil (56) auch in Abhängigkeit vom Signal des Positionssensors (44) anzusteuern.

9. Anordnung nach einem der vorhergehenden Patentansprüche, wobei die Druckmittelsenke ein Tank (T) ist.

10. Anordnung nach einem der vorhergehenden Patentansprüche, wobei der Ablaufkanal (46) eine mit dem in Richtung "Heben" wirksamen Druckraum (10) verbundene Arbeitsleitung (24) mit einer weiteren Arbeitsleitung (26) verbindet, die mit dem in Richtung "Senken" wirksamen Druckraum (12) verbunden ist, der bei Einstellung des Wegeventils (4) in die "Heben"-Position mit der Druckmittelsenke in Druckmittelverbindung steht.

11. Anordnung nach Patentanspruch 10, wobei im Ablaufkanal (46), vorzugsweise stromabwärts des Drosselventils (56) ein in Richtung zur Druckmittelsenke öffnendes Rückschlagventil (62) angeordnet ist.

12. Anordnung nach einem der vorhergehenden Patentansprüche, wobei das Wegeventil (4) einen Schieberverstellbereich "Schwimmstellung" und/oder "Neutral" und/oder "Senken" und "Heben" hat.

13. Anordnung nach einem der vorhergehenden Patentansprüche, wobei dem in Richtung "Senken" wirksamen Druckraum (12) ein konstanter Drosselquerschnitt (48) zugeordnet ist, der mittels eines Schaltventils (50) oder dergleichen aktivierbar und über den eine Druckmittelverbindung zu einer Druckmittelsenke aufsteuerbar ist.

14. Verfahren zur hydraulischen Ansteuerung eines mit zumindest einem Hubzylinder (8) ausgeführten Hubwerkes (2) oder Anbaugerätes (16) eines mobilen Arbeitsgerätes, insbesondere eine landwirtschaftlichen Nutzfahrzeuges, mit einem stetig verstellbaren Wegeventil (4), das einen Arbeitsanschluss (A) hat, der in Druckmittelverbindung mit einem in einer ersten Betätigungsrichtung ("Heben") wirksamen Druckraum (10) des Hubzylinders 8) steht und das einen weiteren Arbeitsanschluss (B) hat, der in Druckmittelverbindung mit einem zweiten, in einer zweiten Betätigungsrichtung ("Senken") wirksamen Druckraum (12) des Hubzylinders (8) steht, wobei das Wegeventil (4) noch einen Tankanschluss (T) und einen Druckanschluss (P) hat und durch Verstellen des Wegeventils (4) Öffnungsquerschnitte zwischen den Anschlüssen auf- bzw. zusteuerbar sind und mit einem Steuergerät (36) zur Ansteuerung des Wegeventils (4), sowie mit einem Ablaufkanal (46), der von dem an den Arbeitsanschluss (A) angeschlossenen Druckmittelströmungspfad abzweigt und zu einer Druckmittelsenke führt und in dem ein Drosselquerschnitt (48) angeordnet ist, der bei Verstellung des Wegeventils (4) in Richtung "Heben" geöffnet ist,
mit den Schritten:
- Verstellen des Wegeventils (4) in eine "Heben"-Position und
- Öffnen des Ablaufkanals (46) mit einem definierten Drosselquerschnitt (48) zu einer Druckmittelsenke hin.
